(19) **Europäisches Patentamt / European Patent Office / Office européen des brevets**

(11) **EP 4 064 189 A1**

(12) **EUROPEAN PATENT APPLICATION**
published in accordance with Art. 153(4) EPC

(43) Date of publication:
**28.09.2022 Bulletin 2022/39**

(21) Application number: **20896430.4**

(22) Date of filing: **19.11.2020**

(51) International Patent Classification (IPC):
**G06T 7/33** $^{(2017.01)}$

(86) International application number:
**PCT/CN2020/130090**

(87) International publication number:
**WO 2021/109876 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.12.2019 CN 201911212737**

(71) Applicant: **GUANGDONG OPPO MOBILE TELECOMMUNICATIONS CORP., LTD.**
**Dongguan, Guangdong 523860 (CN)**

(72) Inventor: **ZHU, Shengchen**
**Dongguan, Guangdong 523860 (CN)**

(74) Representative: **Mewburn Ellis LLP**
**Aurora Building**
**Counterslip**
**Bristol BS1 6BX (GB)**

(54) **IMAGE PROCESSING METHOD, APPARATUS AND DEVICE, AND STORAGE MEDIUM**

(57) A method and apparatus for image processing, a device, and a storage medium are provided in implementations of the present application, which relate to the technical field of image processing. The method include the following. A foreground image and a background image are obtained by segmenting an original image. A transferred image is obtained by performing style transfer on an image to-be-transferred based on style selection information, where the image to-be-transferred includes the foreground image and/or the background image, and the style selection information includes $n$ transfer styles, where $n$ is a positive integer. An output image is generated based on the transferred image. Implementations of the present application can increase diversity in effects of the output image.

FIG. 1

**Description**

CROSS-REFERENCE TO RELATED APPLICATION(S)

This application claims priority to Chinese Patent Application No. 201911212737.9, filed December 02, 2019, and entitled "METHOD AND APPARATUS FOR IMAGE PROCESSING, DEVICE, AND STORAGE MEDIUM", the entire disclosure of which is hereby incorporated by reference.

TECHNICAL FIELD

This application relates to the technical field of image processing, and in particular to a method and apparatus for image processing, a device, and a storage medium.

BACKGROUND

With the development of technology, a user can edit an original image to generate a new image.
In related arts, the user can perform style transfer on the original image to generate a new image. In terms of style transfer, the new image is generated through a style transfer algorithm by using the original image as a content image and another image as a style image. The new image has a similar content as the content image and a similar style as the style image. Generally, style transfer is performed on the original image by adding a layer of filter on top of the original image.

SUMMARY

Implementations of this application provide a method and apparatus for image processing, a device, and a storage medium. The technical solutions are as follows.
In an aspect, implementations of this application provide a method for image processing. The method includes the following.
A foreground image and a background image are obtained by segmenting an original image. A transferred image is obtained by performing style transfer on an image to-be-transferred based on style selection information, where the image to-be-transferred includes at least one of the foreground image and the background image, and the style selection information includes $n$ transfer styles, where $n$ is a positive integer. An output image is generated based on the transferred image.
In another aspect, implementations of this application provide an apparatus for image processing. The apparatus includes an image segmenting module, an image processing module, and an image generating module.
The image segmenting module is configured to obtain a foreground image and a background image by segmenting an original image. The image processing module is configured to obtain a transferred image by performing style transfer on an image to-be-transferred based on style selection information, where the image to-be-transferred includes at least one of the foreground image and the background image, and the style selection information includes $n$ transfer styles, where $n$ being a positive integer. The image generating module is configured to generate an output image based on the transferred image.
In another aspect, implementations of this application provide a computer device. The computer device includes a processor and a memory. The memory stores a computer program. The computer program is loaded and executed by the processor to achieve the method for image processing as described above.
In another aspect, implementations of this application provide a computer-readable storage medium. The computer-readable storage medium stores a computer program. The computer program is loaded and executed by the processor to achieve the method for image processing as described above.

BRIEF DESCRIPTION OF THE DRAWINGS

FIG. 1 is a flowchart of a method for image processing provided in an implementation of this application.
FIG. 2 is a schematic structural diagram of a style transfer model provided in an implementation of this application.
FIG. 3 is a schematic structural diagram of a convolutional layer provided in an implementation of this application.
FIG. 4 is a schematic structural diagram of a residual layer provided in an implementation of this application.
FIG. 5 is a flowchart of a method for image segmentation provided in an implementation of this application.
FIG. 6 is a flowchart of a method for image processing provided in another implementation of this application.

FIG. 7 is a block diagram of an apparatus for image processing provided in an implementation of this application.
FIG. 8 is a block diagram of an apparatus for image processing provided in another implementation of this application.
FIG. 9 is a structural block diagram of a computer device provided in an implementation of this application.

DETAILED DESCRIPTION

In order to make objectives, technical solutions, and advantages of the present application clearer, implementations of the present application will be further described in detail below with reference to the accompanying drawings.

In implementations of the present application, each step may be performed by a computer device, and the computer device refers to an electronic device with computing and processing capabilities. The computer device may be a terminal. For example, the terminal may be a mobile phone, a tablet computer, a multimedia player, or other portable electronic devices. The computer device may also be a server, and the server may be one server or a server cluster composed of multiple servers.

Hereinafter, implementations of the present application will be introduced and described.

Implementations of the present application provides a method for image processing. The method includes the following.

A foreground image and a background image are obtained by segmenting an original image. A transferred image is obtained by performing style transfer on an image to-be-transferred based on style selection information, where the image to-be-transferred includes at least one of the foreground image and the background image, and the style selection information includes $n$ transfer styles, where $n$ is a positive integer. An output image is generated based on the transferred image.

In exemplary implementations, the transferred image is obtained by performing style transfer on the image to-be-transferred based on the style selection information as follows.

The transferred image is obtained by performing style transfer on the image to-be-transferred based on the style selection information through a style transfer model.

In exemplary implementations, the transferred image is obtained by performing style transfer on the image to-be-transferred based on the style selection information through the style transfer model as follows.

$m$ transfer styles are selected from the $n$ transfer styles, where $m$ is a positive integer less than or equal to $n$. The transferred image is obtained by performing style transfer on the image to-be-transferred based on the $m$ transfer styles through the style transfer model.

In exemplary implementations, the transferred image is obtained by performing style transfer on the image to-be-transferred based on the $m$ transfer styles through the style transfer model as follows.

For an i-th transfer style in the $m$ transfer styles, a product of a weight of the i-th transfer style and a style parameter of the i-th transfer style is determined as a target style parameter of the i-th transfer style, where i is a positive integer less than or equal to $m$. A sum of target style parameters of the $m$ transfer styles is determined as a transfer style parameter corresponding to the image to-be-transferred. The transferred image is obtained by performing style transfer on the image to-be-transferred based on the transfer style parameter through the style transfer model.

In exemplary implementations, the image to-be-transferred includes the foreground image and the background image. The method further includes the following prior to obtaining the transferred image by performing style transfer on the image to-be-transferred based on the style selection information through the style transfer model.

From a set of style transfer models, a model supporting style transfer using first style selection information and second style selection information is selected as the style transfer model, where the set of style transfer models includes at least one model, the first style selection information represents a transfer style corresponding to the foreground image, and the second style selection information represents a transfer style corresponding to the background image.

In exemplary implementations, the image to-be-transferred includes the foreground image and the background image. The method further includes the following prior to obtaining the transferred image by performing style transfer on the image to-be-transferred based on the style selection information through the style transfer model.

From a set of style transfer models, a model supporting style transfer using first style selection information is selected as a first style transfer model, where the set of style transfer models includes at least one model, the first style selection information represents a transfer style corresponding to the foreground image, and the first style transfer model is used for style transfer of the foreground image. From the set of style transfer models, a model supporting style transfer using second style selection information is selected as a second style transfer model, where the second style selection information represents a transfer style corresponding to the background image, and the second style transfer model is used for style transfer of the background image.

In exemplary implementations, the method further includes the following prior to obtaining the transferred image by performing style transfer on the image to-be-transferred based on the style selection information through the style transfer model.

Training data of the style transfer model is obtained, where the training data includes at least one training sample, the training sample includes a training image and a style image, and the style image is used as a reference style in style transfer. A training transferred image is obtained by performing style transfer on the training image through the style transfer model. A value of a loss function is determined based on a content feature of the training image, a content feature of the training transferred image, a style feature of the training transferred image, and a style feature of the style image. A trained style transfer model is obtained by training the style transfer model based on the value of the loss function.

In exemplary implementations, the value of the loss function is determined based on the content feature of the training image, the content feature of the training transferred image, the style feature of the training transferred image, and the style feature of the style image as follows.

A value of a content loss function is determined based on the content feature of the training image and the content feature of the training transferred image. A value of a style loss function is determined based on the style feature of the training transferred image and the style feature of the style image. The value of the loss function is determined based on the value of the content loss function and the value of the style loss function.

In exemplary implementations, the style transfer model includes a depth-wise separable convolutional layer, an instance normalization layer, a non-linear activation layer, a nearest-neighbor upsampling layer, and an output layer.

The depth-wise separable convolutional layer is configured to obtain a first output feature by performing depth-wise convolution on the image to-be-transferred and obtain a second output feature by performing point-wise convolution on the first output feature. The instance normalization layer is configured to obtain a third output feature by normalizing the second output feature based on a transfer style parameter corresponding to a transfer style of the image to-be-transferred. The non-linear activation layer is configured to obtain a fourth output feature by performing non-linear operation on the third output feature. The nearest-neighbor upsampling layer is configured to obtain a fifth output feature by interpolating the fourth output feature, where the fifth output feature has a resolution higher than the fourth output feature. The output layer is configured to output the transferred image by performing convolution on the fifth output feature.

In exemplary implementations, the image to-be-transferred includes the foreground image and the background image. The output image is generated based on the transferred image as follows.

The output image is generated by adding pixel values of pixels at a same position in a foreground style transfer image and a background style transfer image, where the foreground style transfer image is obtained by performing style transfer on the foreground image, and the background style transfer image is obtained by performing style transfer on the background image.

In exemplary implementations, the foreground image and the background image are obtained by segmenting the original image as follows.

A foreground grayscale matrix and a background grayscale matrix are obtained by segmenting the original image through an image segmentation model. The foreground image and the background image are obtained by multiplying the original image with the foreground grayscale matrix and multiplying the original image with the background grayscale matrix.

In exemplary implementations, the method further includes the following prior to obtaining the transferred image by performing style transfer on the image to-be-transferred based on the style selection information.

An image indication instruction is obtained. If the image indication instruction indicates that the image to-be-transferred includes the foreground image, first style selection information is obtained. If the image indication instruction indicates that the image to-be-transferred includes the background image, second style selection information is obtained. If the image indication instruction indicates that the image to-be-transferred includes the foreground image and the background image, the first style selection information and the second style selection information are obtained. The first style selection information is used for style transfer of the foreground image, and the second style selection information is used for style transfer of the background image.

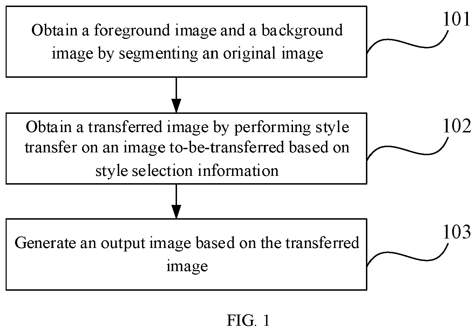

Referring to FIG. 1, FIG. 1 illustrates a flowchart of a method for image processing provided in an implementation of the present application. The method may include the following steps.

At step 101, a foreground image and a background image are obtained by segmenting an original image.

The original image may be any image. The foreground image refers to an image corresponding to a person or object in the foreground of the original image. The background image refers to an image corresponding to a scene that sets off the object in the original image.

At step 102, a transferred image is obtained by performing style transfer on an image to-be-transferred based on style selection information.

In implementations of the present application, the image to-be-transferred refers to an image that requires style transfer. The image to-be-transferred includes the foreground image and/or the background image. That is, the image to-be-transferred may include the foreground image. Alternatively, the image to-be-transferred may include the background image. Alternatively, the image to-be-transferred may include the foreground image and the background image. In case that the image to-be-transferred includes the foreground image, a computer device performs style transfer on the foreground image based on the style selection information to obtain a foreground style transfer image. In case that the image to-be-transferred includes the background image, the computer device performs style transfer on the background image based on the style selection information to obtain a background style transfer image. In case that the image to-be-transferred includes the foreground image and the background image, the computer device performs style transfer on the foreground image and the background image to obtain the foreground style transfer image and the background style transfer image.

The style selection information includes $n$ transfer styles, where $n$ is a positive integer. For example, the style selection information may be a style selection vector, where the style selection vector includes $n$ elements, and each element corresponds to one transfer style. If the element has a value of 0, it indicates that the transfer style corresponding to the element is not used as a transfer style corresponding to the image to-be-transferred. The transfer style corresponding to the image to-be-transferred refers to a transfer style used in style transfer of the image to-be-transferred. For example, assume that the style selection information includes three transfer styles: a first transfer style, a second transfer style, and a third transfer style. The style selection vector may be denoted as [0,0,1], where [0,0,1] represents that style transfer is performed on the image to-be-transferred by using the third transfer style. The style selection vector may further be denoted as [0,1,0], where [0,1,0] represents that style transfer is performed on the image to-be-transferred by using the second transfer style. The style selection vector may further be denoted as [1,0,0], where [1,0,0] represents that style transfer is performed on the image to-be-transferred by using the first transfer style.

At step 103, an output image is generated based on the transferred image.

The output image refers to an image which is similar in content to the original image and similar in style to the transferred image. In case that the image to-be-transferred includes the foreground image, the computer device generates the output image based on the foreground style transfer image and the original image. In case that the image to-be-transferred includes the background image, the computer device generates the output image based on the background style transfer image and the original image. In case that the image to-be-transferred includes the foreground image and the background image, the computer device generates the output image based on the foreground style transfer image and the background style transfer image.

In summary, in the technical solutions provided in implementations of the present application, the transferred image is obtained by performing style transfer on the foreground image and/or the background image based on the style selection information, and the output image is generated based on the transferred image. As such, in implementations of the present application, style transfer can be performed independently on the foreground image, on the background image, or on the foreground image and the background image. Compared with adding a layer of filter on top of the original image in related arts, diversity in effects of the output image can be improved.

In exemplary implementations, the computer device obtains the transferred image by performing style transfer on the image to-be-transferred based on the style selection information through a style transfer model.

The style transfer model refers to a model by which style transfer is performed on the image to-be-transferred. For example, the style transfer model may implement style transfer through deep learning. The style transfer model may implement single-style transfer and may also implement multiple-style transfer. The style transfer model can run on a graphics processing unit (GPU). Running the style transfer model on the GPU can improve an operation speed of the style transfer model.

In exemplary implementations, the above step may include the following sub-steps.

First, $m$ transfer styles are selected from the $n$ transfer styles, where $m$ is a positive integer less than or equal to $n$.

The user can select $m$ transfer styles from the $n$ transfer styles as the transfer styles corresponding to the image-to-be-transferred. For example, from three transfer styles, the user can select any one, two, or three transfer styles as the transfer styles corresponding to the image-to-be-transferred.

Second, the transferred image is obtained by performing style transfer on the image to-be-transferred based on the $m$ transfer styles through the style transfer model.

For example, the transferred image can be obtained as follows.

1. For an i-th transfer style in the $m$ transfer styles, a product of a weight of the i-th transfer style and a style parameter of the i-th transfer style is determined as a target style parameter of the i-th transfer style, where i is a positive integer less than or equal to $m$.

The weight of the i-th transfer style is used for indicating a proportion of the i-th transfer style in the $m$ transfer styles. For example, the greater the weight of the i-th transfer style, the more obvious the style of the i-th transfer style in the transferred image. The weight of the i-th transfer style can be customized by the user or preconfigured by the computer device. A style parameter of a transfer style refers to a parameter representing the transfer style. The style parameter may include a mean of the transfer style and a standard deviation of the transfer style. In other possible implementations, the style parameter may further include other parameters. For example, the style parameter may include a variance of the transfer style. Assume that the style selection information is [0,0,1], that is, there are three transfer styles, i.e., a first transfer style, a second transfer style, and a third transfer style. The first transfer style has a weight of 0, the second transfer style has a weight of 0, and the third transfer style has a weight of 1. That is, the user selects the third transfer style as the transfer style corresponding to the image to-be-transferred. The third transfer style has a mean of 0.5 and a standard deviation of 0.7, so that a target mean of the third transfer style is 1*0.5=0.5 and a target standard deviation of the third transfer style is 1*0.7=0.7.

Assume that the style selection information is [0.5,0.5,0], that is, the first transfer style has a weight of 0.5, the second transfer style has a weight of 0.5, and the third transfer style has a weight of 0. In other words, the user selects the first transfer style and the second transfer style as transfer styles corresponding to the image to-be-transferred. Assume that the first transfer style has a mean of 0.2 and a standard deviation of 0.4, and the second transfer style has a mean of 0.3 and a standard deviation of 0.6. In this case, a target mean of the first transfer style is 0.5*0.2=0.1, a target standard deviation of the first transfer style is 0.5*0.4=0.2, a target mean of the second transfer style is 0.5*0.3=0.15, and a target standard deviation of the second transfer style is 0.5*0.6=0.3.

2. A sum of target style parameters of the $m$ transfer styles is determined as a transfer style parameter corresponding to the image to-be-transferred.

In case that the target style parameter includes the target mean and the target standard deviation, a sum of the target means of $m$ transfer styles is determined as a transfer mean corresponding to the image to-be-transferred, and a sum of the standard deviations of $m$ transfer styles is determined as a transfer standard deviation corresponding to the image to-be-transferred.

Still referring to the above examples, in case that the style selection information is [0,0,1], the transfer mean corresponding to the image to-be-transferred is 0.5, the transfer standard deviation is 0.7.

In case that the style selection information is [0.5,0.5,0], the transfer mean corresponding to the image to-be-transferred is 0.1+0.15=0.25, the transfer standard deviation is 0.2+0.3=0.5.

If the image to-be-transferred includes the foreground image and the background image, the foreground image corresponds to first style selection information, and the background image corresponds to second style selection information. In this case, a transfer style parameter corresponding to the foreground image and a transfer style parameter corresponding to the background image can be calculated in a similar manner to the above, which will not be repeated herein.

3. The transferred image is obtained by performing style transfer on the image to-be-transferred based on the transfer style parameter through the style transfer model.

In summary, in the technical solutions provided in implementations of the present application, style transfer is performed on the image to-be-transferred based on the style selection information through the style transfer model. The style transfer model can implement single-style transfer and may also implement multi-style transfer, which improves a diversity of the transferred image.

By determining the sum of the target style parameters of the $m$ transfer styles as the transfer style parameter corresponding to the image to-be-transferred, the multi-style transfer can be achieved. The transferred image can be generated based on the style selection information and the image to-be-transferred through the style transfer model, which is easy to operate.

In exemplary implementations, the image to-be-transferred includes the foreground image and the background image. Before performing style transfer on the foreground image and the background image through the style transfer model, the style transfer model should be determined first. The style transfer model may be determined as follows.

In one example, a model supporting style transfer using first style selection information and second style selection information is selected from a set of style transfer models as the style transfer model.

In implementations of the present application, the set of style transfer models includes at least one model, the first style selection information represents a transfer style corresponding to the foreground image, and the second style selection information represents a transfer style corresponding to the background image. The first style selection information may be the same as or different from the second style selection information. In other words, the transfer style corresponding to the foreground image may be the same as or different from that corresponding to the background image. For example, the first style selection information and the second style selection information both have $n$ transfer styles.

By selecting the model supporting style transfer using the first style selection information and the second style selection information to perform style transfer on the image to-be-transferred, the computer device can achieve style transfer of the foreground image and the background image by invoking only one style transfer model, which reduces a storage requirement of the computer device.

In another example, a model supporting style transfer using the first style selection information is selected from a set of style transfer models as a first style transfer model, and a model supporting style transfer using the second style selection information is selected from a set of style transfer models as a second style transfer model.

In implementations of the present application, the set of style transfer models includes at least one model, the first style selection information represents a transfer style corresponding to the foreground image, and the first style transfer model is used for style transfer of the foreground image. The second style selection information represents a transfer style corresponding to the background image, and the second style transfer model is used for style transfer of the background image. For example, the first style transfer model is the one having a shortest operation time in the set of style transfer models, or the first style transfer model is the one having a highest operation accuracy in the set of style transfer models. For another example, the second style transfer model is the one having a shortest operation time in the set of style transfer models, or the second style transfer model is the one having a highest operation accuracy in the set of style transfer models.

For instance, the operation time represents operational efficiency. By selecting the model with the shortest operation time as the style transfer model, the operational efficiency of the style transfer model can be ensured.

For instance, the operation accuracy can be determined based on a style matching degree between the transferred image output from the style transfer model and the style image. The higher the style matching degree, the higher the operation accuracy. On the contrary, the lower the style matching degree, the lower the operation accuracy. Selecting the model with the highest operation accuracy as the style transfer model can be applied to a service scenario which requires a higher operation accuracy. The first style transfer model and the second style transfer model can be selected based on different requirements of the foreground image and the background image. For example, in case that the foreground image has a high requirement for operation accuracy, the model that supports the first style information and has the highest operation accuracy can be selected as the first style transfer model. In case that the background image has a high requirement for operation time, the model that supports the second style information and has the shortest operation time can be selected as the second style transfer model.

In summary, in the technical solutions provided in implementations of the present application, by selecting the model with the shortest operation time as the style transfer model, the operational efficiency of the style transfer model can be ensured. By selecting the model with the highest operation accuracy as the style transfer model, the model can be applied to the service scenario which requires a higher operation accuracy. The selection of the style transfer model is more flexible by determining the style transfer model(s) in above two different manners.

In an example, before performing style transfer on the image to-be-transferred through the style transfer model, the style transfer model should be trained first. A training process is as follows.

First, training data of the style transfer model is obtained.

In implementations of the present application, the training data includes at least one training sample, and the training sample includes a training image and a style image. The style image is used as a reference style in style transfer. The training image may be any image. For example, the training image may be the foreground image or the background image, which is not limited in implementations of the present application.

Second, a training transferred image is obtained by performing style transfer on the training image through the style transfer model.

The training transferred image is obtained by performing style transfer on the training image. As an example, during training of the style transfer model, the style transfer model performs style transfer on the training image based on a single style. In other word, the style selection information is one-hot information, such as [0,0,1].

Third, a value of a loss function is determined based on a content feature of the training image, a content feature of the training transferred image, a style feature of the training transferred image, and a style feature of the style image.

The content feature of the training image represents an image content contained in the training image. The content feature of the training transferred image represents an image content contained in the training transferred image. The style feature of the training transferred image represents a style of the training transferred image. The style feature of the style image represents a style of the style image.

Optionally, the computer device determines a value of a content loss function based on the content feature of the training image and the content feature of the training transferred image. The computer device determines a value of a style loss function based on the style feature of the training transferred image and the style feature of the style image. The computer device determines the value of the loss function based on the value of the content loss function and the value of the style loss function.

In an example, the computer device may extract the content features of the training image and the training transferred image through Visual Geometry Group (VGG)-19. For instance, an output feature of a relu4_1 (activation 4-1) layer in VGG-19 can be used as the content feature of the training image or the training transferred image.

The content loss function $L_{content}(\vec{p}, \vec{x}, l)$ can be calculated according to the following equation:

$$L_{content}\left(\vec{p}, \vec{x}, l\right) = \frac{1}{2}\sum(X_{ij}^l - P_{ij}^l)^2$$

,

where $\vec{p}$ represents the content feature of the training transferred image, $\vec{x}$ represents the content feature of the training

image, *l* represents a layer index, $X_{ij}^l$ represents an eigenvalue at row *i* and column *j* of layer *l* in the training image, and $P_{ij}^l$ represents an eigenvalue at row *i* and column *j* of layer *l* in the training transferred image.

In an example, the computer device may extract the style features of the training transferred image and the style image through VGG-19. For instance, an output feature of a relu1_1 (activation 1-1) layer, a relu2_1 (activation 2-1) layer, a relu3_1 (activation 3-1) layer, or a relu4_1 (activation 4-1) layer can be used as the style feature of the training transferred image or the style image.

Optionally, a feature sensing matrix is first calculated before calculating the style loss function. The feature sensing matrix $G_j^\phi (x)_{c,\ c'}$ can be calculated according to the following equation:

$$G_j^\phi (x)_{c,\ c'} = \frac{1}{C_j H_j W_j} \sum_{h=1}^{H_j} \sum_{w=1}^{W_j} \phi_j (x)_{h,\ w,\ c} \phi_j (x)_{h,\ w,\ c'},$$

where $C_j$ represents the number of channels of layer *j*, $H_j$ represents a length of layer *j*, $W_j$ represents a width of layer *j*, $\phi_j (x)_{h,\ w,\ c}$ represents an eigenvalue of layer *j* of VGG-19, and $\phi_j (x)_{h,\ w,\ c'}$ represents a transposition of $\phi_j (x)_{h,\ w,\ c}$.

The style loss function $L_{style}^{\phi,\ j} \left( \hat{y},\ y \right)$ can be calculated based on the above feature sensing matrix as follows:

$$L_{style}^{\phi,\ j} \left( \hat{y},\ y \right) = \left\| G_j^\phi \left( \hat{y} \right) - G_j^\phi (y) \right\|_F^2,$$

where $G_j^\phi \left( \hat{y} \right)$ represents a feature sensing matrix of the training transferred image, $G_j^\phi (y)$ represents a feature sensing matrix of the style image, and *F* represents norm.

In possible implementations, the sum of the value of content loss function and the value of style loss function is determined as the value of the loss function. The loss function $L(\theta)$ can be calculated according to the following equation:

$$L(\theta) = \alpha L_{content} \left( \vec{P}, \vec{x},\ l \right) + \beta L_{style}^{\phi,\ j} \left( \hat{y},\ y \right),$$

where $\alpha$ represents a weight of the content loss function in the loss function, $\beta$ represents a weight of the style loss function in the loss function, $L_{content} (\vec{p}, \vec{x},\ l)$ represents the content loss function, and $L_{style}^{\phi,\ j} \left( \hat{y},\ y \right)$ represents the style loss function. The content feature of the training transferred image is more obvious as increases. The style feature of the training transferred image is more obvious as $\beta$ increases.

Fourth, a trained style transfer model is obtained by training the style transfer model based on the value of the loss function.

When the value of the loss function is less than a preset threshold, the training of the style transfer model is stopped and the trained style transfer model is obtained. Of course, in other possible implementations, when the training times reach the preset times, the training of the style transfer model is stopped and the trained style transfer model is obtained. In an example, the computer device trains the style parameter included in the style transfer model based on the value of the loss function.

In summary, in the technical solutions provided in implementations of the present application, by training the style transfer model based on the content feature of the training image, the content feature of the training transferred image, the style feature of the training transferred image, and the style feature of the style image, the trained style transfer model with a higher accuracy can be finally obtained.

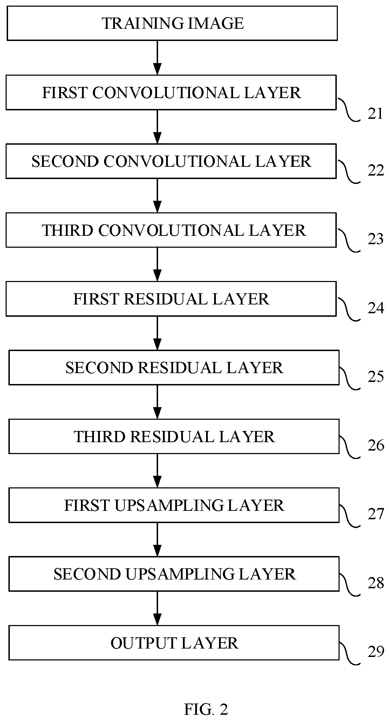

As illustrated in FIG. 2, FIG. 2 illustrates a schematic structural diagram of a style transfer model provided in an implementation of the present application. In the style transfer model, the image to-be-transferred will pass through a first convolutional layer 21, a second convolutional layer 22, and a third convolutional layer 23, then through a first residual layer 24, a second residual layer 25, and a third residual layer 26, then through a first upsampling layer 27, a second upsampling layer 28, and finally through an output layer 29.

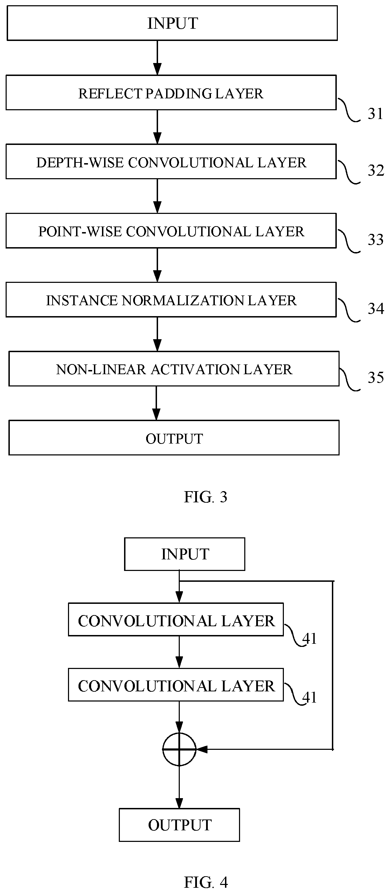

In an example, a structure of each of the first convolutional layer 21, the second convolutional layer 22, and the third convolutional layer 23 is illustrated in FIG. 3. The first convolutional layer 21, the second convolutional layer 22, and the third convolutional layer 23 each include a reflect padding layer 31, a depth-wise convolutional layer 32, a point-wise convolutional layer 33, an instance normalization layer 34, and a non-linear activation layer 35.

In an example, in the depth-wise convolutional layer 32 in the first convolutional layer 21, the number of convolution kernels is 32, the size of the convolution kernel is 9x9, and the step width is 1. In the depth-wise convolutional layer 32 in the second convolutional layer 22, the number of convolution kernels is 64, the size of the convolution kernel is 3x3, and the step width is 2. In the depth-wise convolutional layer 32 in the third convolutional layer 23, the number of convolution kernels is 128, the size of the convolution kernel is 3x3, and the step width is 2.

The depth-wise separable convolutional layer is configured to obtain a first output feature by performing depth-wise convolution on the image to-be-transferred and obtain a second output feature by performing point-wise convolution on the first output feature. Optionally, the depth-wise separable convolutional layer includes a depth-wise convolutional layer 32 and a point-wise convolutional layer 33. Depth-wise separable convolution is an operation that decomposes a standard convolution into a depth-wise convolution and a $1 \times 1$ convolution, that is, a point-wise convolution. Depth-wise separable convolution can significantly reduce the number of parameters and computation amount of the style transfer model. Obtaining the first output feature by performing depth-wise convolution on the image to-be-transferred can be executed on the depth-wise convolutional layer 32. Obtaining the second output feature by performing point-wise convolution on the first output feature can be executed on the point-wise convolutional layer 33. Before performing depth-wise convolution on the image to-be-transferred, reflect padding may be first performed on the image to-be-transferred on the reflect padding layer 31. The padding is [[0,0], [padding,padding], [padding,padding], [0,0]], where the size of padding is the size of the convolution kernel divided by 2 and rounded up. Then a padded image to-be-transferred is obtained. The padded image to-be-transferred is then input into the depth-wise convolutional layer 32.

The instance normalization layer 34 is configured to obtain a third output feature by normalizing the second output feature based on a transfer style parameter corresponding to a transfer style of the image to-be-transferred. Normalizing the second output feature based on the transfer style parameter on the instance normalization layer 34 can be achieved by the following instance normalization (IN) feature equation:

$$ feature = \frac{c - c_{mean}}{c_{std}} v_{std} + v_{mean} $$

,

where $c$ represents a feature map obtained after convolution of the image to-be-transferred, $c_{mean}$ represents a mean of $c$, $c_{std}$ represents a standard deviation of $c$, $v_{mean}$ represents a mean of feature maps of the style image, and $v_{std}$ represents a standard deviation of feature maps of the style image. $v_{mean}$, $v_{std}$, $c_{mean}$, and $c_{std}$ have the same number of channels. $v_{mean}$ is initialized as an all-zero vector, and $v_{std}$ is initialized as an all-one vector. The training of the style transfer model is the training of $v_{mean}$ and $v_{std}$.

The non-linear activation layer 35 is configured to obtain a fourth output feature by performing non-linear operation on the third output feature. For example, the non-linear operation can be performed with a non-linear activation function RELU.

A structure of each of the first residual layer 24, the second residual layer 25, and the third residual layer 26 is illustrated in FIG. 4. The residual layer includes two convolutional layers 41. A result obtained after an input passed through the two convolutional layers 41 is added to the input to obtain an output. This structure is beneficial to the stability and convergence of the style transfer model. For depth-wise convolution in the convolutional layers 41 included in the first residual layer 24, the second residual layer 25, and the third residual layer 26, the number of convolution kernels is 128, the size of the convolution kernel is 3x3, and the step width is 1.

The first upsampling layer 27 and the second upsampling layer 28 each include a convolutional layer and a nearest-neighbor upsampling layer. The nearest-neighbor upsampling layer is configured to obtain a fifth output feature by interpolating the fourth output feature, where the fifth output feature has a resolution higher than the fourth output feature. After the nearest-neighbor upsampling layer doubles the resolution of the fourth output feature, the fifth output feature is obtained. Compared with performing upsampling by means of deconvolution in the related art, implementations of the present application can effectively avoid a checkerboard effect by performing nearest-neighbor upsampling. For depth-wise convolution in the first upsampling layer 27, the number of convolution kernels is 64, the size of the convolution kernel is 3x3, and the step width is 2. For depth-wise convolution in the second upsampling layer 28, the number of convolution kernels is 32, the size of the convolution kernel is 3x3, and the step width is 2.

The output layer 29 is configured to output the transferred image by performing convolution on the fifth output feature. For depth-wise convolution in the convolutional layer included in the output layer 29, the number of convolution kernels is 3, the size of the convolution kernel is 9x9, the step width is 1, and the activation function is tanh.

In summary, in the technical solutions provided in implementations of the present application, the style transfer model adopts depth-wise separable convolution, which can reduce the operation time of the style transfer model. In addition, the style transfer model adopts nearest-neighbor upsampling, which can effectively avoid the checkerboard effect.

In exemplary implementations, the image to-be-transferred includes the foreground image and the background image. In this case, the computer device can generate the output image by adding pixel values of pixels at a same position in a foreground style transfer image and a background style transfer image.

In implementations of the present application, the foreground style transfer image is obtained by performing style transfer on the foreground image, and the background style transfer image is obtained by performing style transfer on the background image.

In an example, the foreground image and the background image can be obtained as follows.

A foreground grayscale matrix and a background grayscale matrix are obtained by segmenting the original image through an image segmentation model. The foreground image and the background image are obtained by multiplying the original image with the foreground grayscale matrix and multiplying the original image with the background grayscale matrix.

Optionally, the computer device can segment the original image through the image segmentation model to obtain the foreground grayscale matrix. An area where element 1 in the foreground grayscale matrix is located represents the foreground image. The computer device multiplies the original image with the foreground grayscale matrix to obtain the foreground image. Thereafter, the computer device inverses the foreground grayscale matrix to obtain the background grayscale matrix. An area where element 1 in the background grayscale matrix is located represents the background image. The computer device multiplies the original image with the background grayscale matrix to obtain the background image. Of course, in other possible implementations, the computer device can segment the original image through the image segmentation model to obtain the background grayscale matrix. An area where element 1 in the background grayscale matrix is located represents the background image. The computer device multiplies the original image with the background grayscale matrix to obtain the background image. Thereafter, the computer device inverses the background grayscale matrix to obtain the foreground grayscale matrix. An area where element 1 in the foreground grayscale matrix is located represents the foreground image. The computer device multiplies the original image with the foreground grayscale matrix to obtain the foreground image.

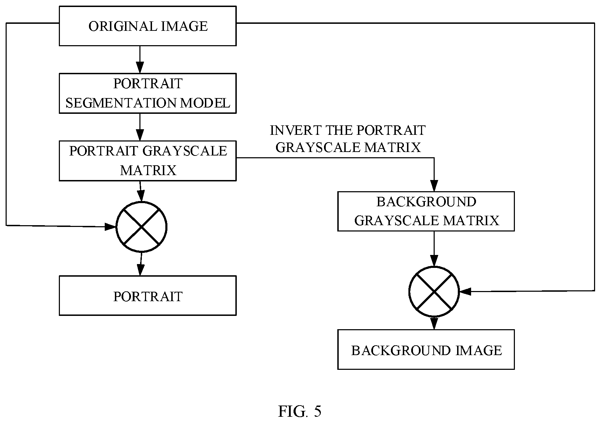

For example, assume that the foreground image is a portrait. As illustrated in FIG. 5, the computer device can obtain an original image read in RGB format to obtain an image matrix $I_{h, w, c}$, where $h$ and $w$ represent a height and a width of the original image respectively, and $c$ represents the number of channels, which is 3. The original image is represented as an RGB three-channel image. The image matrix is input into a portrait segmentation model to obtain a portrait grayscale matrix $O_{h, w}$, where $h$ and $w$ are the same as the height and the width of the original image. Values in $O_{h, w}$ include 0 and 1, where positions of 1 represent the portrait. The portrait $P_{h, w, c}$ can be calculated by the following equation: $P_{h, w, c} = = I_{h, w, c} \otimes O_{h, w,}$ where $\otimes$ represents multiplication of elements at corresponding position of the two matrices. The portrait grayscale matrix is inverted, that is, 1 is changed into 0 and 0 is changed into 0, to obtain a background grayscale matrix $O'_{h, w}$. The background image $B_{h, w, c}$ can be calculated by the following equation:

$$B_{h, w, c} = I_{h, w, c} \otimes O'_{h, w}.$$

It should be noted that, in implementations of the present application, the background image or the foreground image is only represented by the area where element 1 is located in the background grayscale matrix or the foreground grayscale matrix. In other possible implementations, the background image or the foreground image can be represented by the area where element 0 is located in the background grayscale matrix or the foreground grayscale matrix, which is not limited herein.

In an example, the method for image processing provided in implementations of the present application may further include the following prior to obtaining the transferred image by performing style transfer on the image to-be-transferred based on the style selection information.

An image indication instruction is obtained. If the image indication instruction indicates that the image to-be-transferred includes the foreground image, first style selection information is obtained. If the image indication instruction indicates that the image to-be-transferred includes the background image, second style selection information is obtained. If the image indication instruction indicates that the image to-be-transferred includes the foreground image and the background image, the first style selection information and the second style selection information are obtained. The first style selection information is used for style transfer of the foreground image, and the second style selection information is used for style transfer of the background image.

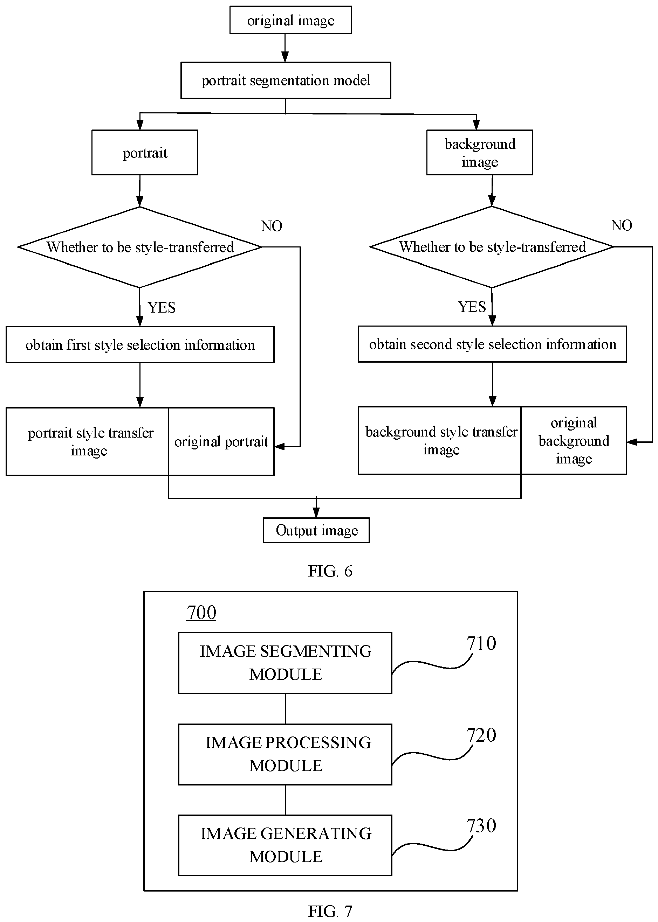

As illustrated in FIG. 6, the process of the method for image processing provided in implementations of the present application is described with the foreground image being a portrait as an example. The computer device obtains an original image. Based on the original image, the computer device obtains a portrait and a background image through a portrait segmentation model. The computer device determines whether the portrait is to be style-transferred. If the portrait is to be style-transferred, the computer device obtains first style selection information and obtains a portrait style transfer image based on the first style transfer information. If the portrait is not to be style-transferred, the portrait remains unchanged. The computer device determines whether the background image is to be style-transferred. If the background image is to be style-transferred, the computer device obtains second style selection information and obtains a background style transfer image based on the second style transfer information. If the background image is not to be style-transferred, the background image remains unchanged. Finally, the computer device obtains an output image based on the portrait style transfer image or the original portrait and the background style transfer image or the original background image.

In the related art, the portrait segmentation model needs to have high accuracy to obtain a good segmentation effect, otherwise edge segmentation of the portrait will be unclear. In the technical solutions provided in implementations of the present application, the portrait segmentation is combined with style transfer. Since style transfer has strong style features, the problem of unclear edge segmentation of the portrait outline can be covered up to a certain extent, so that the portrait segmentation model can work well without high accuracy, which avoids optimization and maintenance of the portrait segmentation model.

The following are apparatus implementations of the present application, which can be used to execute the method implementations of the present application. For details not disclosed in the apparatus implementations of the present application, reference can be made to the method implementations of the present application.

Referring to FIG. 7, FIG. 7 is a block diagram of an apparatus for image processing provided in an implementation of the present application. The apparatus has the function of implementing the above method examples, and the function may be implemented by hardware or by executing corresponding software by hardware. The apparatus 700 may include an image segmenting module 710, an image processing module 720, and an image generating module 730.

The image segmenting module 710 is configured to obtain a foreground image and a background image by segmenting an original image.

The image processing module 720 is configured to obtain a transferred image by performing style transfer on an image to-be-transferred based on style selection information, where the image to-be-transferred includes at least one of the foreground image and the background image, and the style selection information includes $n$ transfer styles, where $n$ being a positive integer.

The image generating module 730 is configured to generate an output image based on the transferred image.

In summary, in the technical solutions provided in implementations of the present application, the transferred image is obtained by performing style transfer on the foreground image and/or the background image based on the style selection information, and the output image is generated based on the transferred image. As such, in implementations of the present application, style transfer can be performed independently on the foreground image, on the background image, or on the foreground image and the background image. Compared with adding a layer of filter on top of the original image in related arts, diversity in effects of the output image can be improved.

In exemplary implementations, the image processing module 720 is configured to obtain the transferred image by performing style transfer on the image to-be-transferred based on the style selection information through a style transfer model.

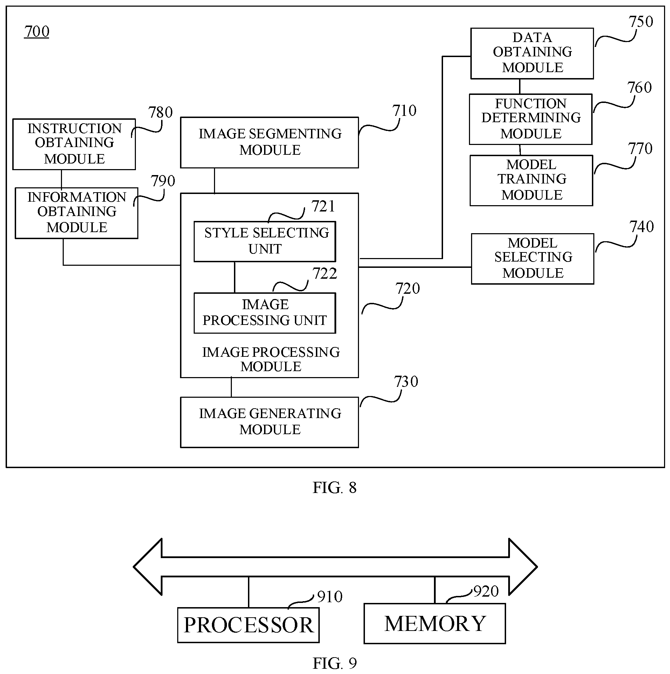

In exemplary implementations, as illustrated in FIG. 8, the image processing module 720 includes a style selecting unit 721 and an image processing unit 722.

The style selecting unit 721 is configured to select $m$ transfer styles from the $n$ transfer styles, where $m$ is a positive integer less than or equal to $n$.

The image processing unit 722 is configured to obtain the transferred image by performing style transfer on the image to-be-transferred based on the m transfer styles through the style transfer model.

In exemplary implementations, the image processing unit 722 is configured to, for an i-th transfer style in the $m$ transfer styles, determine a product of a weight of the i-th transfer style and a style parameter of the i-th transfer style as a target style parameter of the i-th transfer style, where i is a positive integer less than or equal to $m$, determine a sum of target style parameters of the $m$ transfer styles as a transfer style parameter corresponding to the image to-be-transferred, and obtain the transferred image by performing style transfer on the image to-be-transferred based on the transfer style parameter through the style transfer model.

In exemplary implementations, the image to-be-transferred includes the foreground image and the background image. The apparatus 700 further includes a model selecting module 740. The model selecting module 70 is configured to select, from a set of style transfer models, a model supporting style transfer using first style selection information and second style selection information as the style transfer model, where the set of style transfer models includes at least one model, the first style selection information represents a transfer style corresponding to the foreground image, and the second style selection information represents a transfer style corresponding to the background image.

In exemplary implementations, the image to-be-transferred includes the foreground image and the background image. The apparatus 700 further includes the model selecting module 740. The model selecting module 740 is configured to select, from a set of style transfer models, a model supporting style transfer using first style selection information as a first style transfer model, where the set of style transfer models includes at least one model, the first style selection information represents a transfer style corresponding to the foreground image, and the first style transfer model is used for style transfer of the foreground image, and select, from the set of style transfer models, a model supporting style transfer using second style selection information as a second style transfer model, where the second style selection information represents a transfer style corresponding to the background image, and the second style transfer model is used for style transfer of the background image.

The apparatus 700 further includes a data obtaining module 750, a function determining module 760, and a model training module 770.

The data obtaining module 750 is configured to obtain training data of the style transfer model, where the training data includes at least one training sample, the training sample includes a training image and a style image, and the style image is used as a reference style in style transfer.

The image processing module 720 is further configured to obtain a training transferred image by performing style transfer on the training image through the style transfer model.

The function determining module 760 is configured to determine a value of a loss function based on a content feature of the training image, a content feature of the training transferred image, a style feature of the training transferred image, and a style feature of the style image.

The model training module 770 is configured to obtain a trained style transfer model by training the style transfer model based on the value of the loss function.

In exemplary implementations, the function determining module 760 is configured to determine a value of a content loss function based on the content feature of the training image and the content feature of the training transferred image, determine a value of a style loss function based on the style feature of the training transferred image and the style feature of the style image, and determine the value of the loss function based on the value of the content loss function and the value of the style loss function.

In exemplary implementations, the style transfer model includes a depth-wise separable convolutional layer, an instance normalization layer, a non-linear activation layer, a nearest-neighbor upsampling layer, and an output layer.

The depth-wise separable convolutional layer is configured to obtain a first output feature by performing depth-wise convolution on the image to-be-transferred and obtain a second output feature by performing point-wise convolution on the first output feature.

The instance normalization layer is configured to obtain a third output feature by normalizing the second output feature based on a transfer style parameter corresponding to a transfer style of the image to-be-transferred.

The non-linear activation layer is configured to obtain a fourth output feature by performing non-linear operation on the third output feature.

The nearest-neighbor upsampling layer is configured to obtain a fifth output feature by interpolating the fourth output feature, where the fifth output feature has a resolution higher than the fourth output feature.

The output layer is configured to output the transferred image by performing convolution on the fifth output feature.

In exemplary implementations, the image to-be-transferred includes the foreground image and the background image. The image generating module 730 is configured to generate the output image by adding pixel values of pixels at a same position in a foreground style transfer image and a background style transfer image, where the foreground style transfer image is obtained by performing style transfer on the foreground image, and the background style transfer image is obtained by performing style transfer on the background image.

In exemplary implementations, the image segmenting module 710 is configured to obtain a foreground grayscale matrix and a background grayscale matrix by segmenting the original image through an image segmentation model, and obtain the foreground image and the background image by multiplying the original image with the foreground grayscale matrix and multiplying the original image with the background grayscale matrix.

In exemplary implementations, the apparatus 700 further includes an instruction obtaining module 780 and an information obtaining module 790.

The instruction obtaining module 780 is configured to obtain an image indication instruction.

The information obtaining module 790 is configured to obtain first style selection information on condition that the image indication instruction indicates that the image to-be-transferred includes the foreground image.

The information obtaining module 790 is further configured to obtain second style selection information on condition that the image indication instruction indicates that the image to-be-transferred includes the background image.

The information obtaining module 790 is further configured to obtain the first style selection information and the second style selection information on condition that the image indication instruction indicates that the image to-be-transferred includes the foreground image and the background image.

The first style selection information is used for style transfer of the foreground image, and the second style selection information is used for style transfer of the background image.

It should be noted that, when the apparatus provided in the above implementations realizes its functions, the division of the above functional modules are illustrated as an example. In practical application, the above functions can be assigned to different functional modules as needed. In other words, the internal structure is divided into different functional modules to complete all or part of the functions described above. In addition, the apparatus and method implementations provided in the above implementations belong to the same concept, and the specific implementation process thereof is detailed in the method implementations, which will not be repeated herein.

Referring to FIG. 9, FIG. 9 illustrates a structural block diagram of a computer device provided in an implementation of the present application. In possible implementations, the computer device may be a terminal or server.

The computer device in implementations of the present application may include one or more processors 910 and one or more memories 920.

The processor 910 may include one or more processing cores. The processor 910 uses various interfaces and lines to connect various parts in the entire computer device, and executes various functions of the device and processes data by running or executing instructions, programs, code sets, or instruction sets stored in the memory 920 and invoking data stored in the memory 920. Optionally, the processor 910 may be implemented by at least one hardware of a digital signal processing (DSP), a field-programmable gate array (FPGA), and a programmable logic array (PLA). The processor 910 may integrate one or a combination of a central processing unit (CPU), a modem, and the like. The CPU mainly handles the operating system and application programs, and the modem is configured to handle wireless communication. It can be understood that, the above-mentioned modem may not be integrated into the processor 910, but is implemented by a single chip.

Optionally, when the processor 910 executes the program instructions in the memory 920, the method provided in the foregoing method implementations is implemented.

The memory 920 may include a random access memory (RAM), or may also include a read-only memory (ROM). Optionally, the memory 920 includes a non-transitory computer-readable storage medium. The memory 920 may be configured to store instructions, programs, codes, code sets, or instruction sets. The memory 920 may include a stored program region and a stored data region, where the stored program region may store instructions for implementing the operating system, instructions for at least one function, instructions for implementing each of the above method implementations, and the like. The stored data region may store data created according to the use of the computer device, and the like.

The above-mentioned structure of the computer device is only illustrative. In actual implementation, the computer device may include more or less components, such as a display screen, etc., which is not limited in implementations.

Those skilled in the art can understand that the structure illustrated in FIG. 9 does not constitute a limitation on the computer device 900, and may include more or less components than illustrated, or combine some components, or adopt different component arrangements.

In exemplary implementations, a computer-readable storage medium is further provided. The computer-readable storage medium stores a computer program which is loaded and executed by a processor to achieve respective steps in the method for image processing in above implementations.

In exemplary implementations, a computer program product is further provided. When executed, the computer program product is used to achieve the above method for image processing.

It should be understood that the "and/or" mentioned herein describes the association of the associated objects, indicating that there may be three kinds of relationships. For example, A and/or B may indicate three cases: A exists alone, A and B exist at the same time, and B exists alone. The character "/" generally indicates that the associated objects are in an "or" relationship. In addition, the numbering of the steps described herein only exemplarily illustrates a possible execution sequence between the steps. In some other implementations, the above steps may also be executed in different order, such as two steps with different numbers are performed at the same time, or two steps with different numbers are performed in a reverse order to that illustrated in the figure, which is not limited in implementations of the present application.

The above descriptions are only exemplary implementations of the present application, and are not intended to limit the present application. Any modifications, equivalent replacements, improvements, etc. made within the spirit and principles of the present application shall be included in the protection scope of the present application.

**Claims**

1. A method for image processing, comprising:

obtaining a foreground image and a background image by segmenting an original image;
obtaining a transferred image by performing style transfer on an image to-be-transferred based on style selection information, the image to-be-transferred comprising at least one of the foreground image and the background image, the style selection information comprising $n$ transfer styles, $n$ being a positive integer; and
generating an output image based on the transferred image.

2. The method of claim 1, wherein obtaining the transferred image by performing style transfer on the image to-be-transferred based on the style selection information comprises:
obtaining the transferred image by performing style transfer on the image to-be-transferred based on the style selection information through a style transfer model.

3. The method of claim 2, wherein obtaining the transferred image by performing style transfer on the image to-be-transferred based on the style selection information through the style transfer model comprises:

selecting $m$ transfer styles from the $n$ transfer styles, $m$ being a positive integer less than or equal to $n$; and
obtaining the transferred image by performing style transfer on the image to-be-transferred based on the $m$ transfer styles through the style transfer model.

4. The method of claim 3, wherein obtaining the transferred image by performing style transfer on the image to-be-transferred based on the $m$ transfer styles through the style transfer model comprises:

for an i-th transfer style in the $m$ transfer styles, determining a product of a weight of the i-th transfer style and a style parameter of the i-th transfer style as a target style parameter of the i-th transfer style, i being a positive integer less than or equal to $m$;
determining a sum of target style parameters of the $m$ transfer styles as a transfer style parameter corresponding to the image to-be-transferred; and
obtaining the transferred image by performing style transfer on the image to-be-transferred based on the transfer style parameter through the style transfer model.

5. The method of claim 2, wherein the image to-be-transferred comprises the foreground image and the background image, and the method further comprising:
prior to obtaining the transferred image by performing style transfer on the image to-be-transferred based on the style selection information through the style transfer model:
selecting, from a set of style transfer models, a model supporting style transfer using first style selection information and second style selection information as the style transfer model, wherein the set of style transfer models comprises at least one model, the first style selection information represents a transfer style corresponding to the foreground image, and the second style selection information represents a transfer style corresponding to the background image.

6. The method of claim 2, wherein the image to-be-transferred comprises the foreground image and the background image, and the method further comprising:
prior to obtaining the transferred image by performing style transfer on the image to-be-transferred based on the style selection information through the style transfer model:

selecting, from a set of style transfer models, a model supporting style transfer using first style selection information as a first style transfer model, wherein the set of style transfer models comprises at least one model, the first style selection information represents a transfer style corresponding to the foreground image, and the first style transfer model is used for style transfer of the foreground image; and
selecting, from the set of style transfer models, a model supporting style transfer using second style selection information as a second style transfer model, wherein the second style selection information represents a transfer style corresponding to the background image, and the second style transfer model is used for style transfer of the background image.

7. The method of claim 2, further comprising:
prior to obtaining the transferred image by performing style transfer on the image to-be-transferred based on the style selection information through the style transfer model:

obtaining training data of the style transfer model, wherein the training data comprises at least one training sample, the training sample comprises a training image and a style image, and the style image is used as a reference style in style transfer;

obtaining a training transferred image by performing style transfer on the training image through the style transfer model;

determining a value of a loss function based on a content feature of the training image, a content feature of the training transferred image, a style feature of the training transferred image, and a style feature of the style image; and

obtaining a trained style transfer model by training the style transfer model based on the value of the loss function.

8. The method of claim 7, wherein determining the value of the loss function based on the content feature of the training image, the content feature of the training transferred image, the style feature of the training transferred image, and the style feature of the style image comprises:

determining a value of a content loss function based on the content feature of the training image and the content feature of the training transferred image;

determining a value of a style loss function based on the style feature of the training transferred image and the style feature of the style image; and

determining the value of the loss function based on the value of the content loss function and the value of the style loss function.

9. The method of any of claims 2 to 8, wherein the style transfer model comprises a depth-wise separable convolutional layer, an instance normalization layer, a non-linear activation layer, a nearest-neighbor upsampling layer, and an output layer, wherein

the depth-wise separable convolutional layer is configured to obtain a first output feature by performing depth-wise convolution on the image to-be-transferred and obtain a second output feature by performing point-wise convolution on the first output feature;

the instance normalization layer is configured to obtain a third output feature by normalizing the second output feature based on a transfer style parameter corresponding to a transfer style of the image to-be-transferred;

the non-linear activation layer is configured to obtain a fourth output feature by performing non-linear operation on the third output feature;

the nearest-neighbor upsampling layer is configured to obtain a fifth output feature by interpolating the fourth output feature, wherein the fifth output feature has a resolution higher than the fourth output feature; and

the output layer is configured to output the transferred image by performing convolution on the fifth output feature.

10. The method of claim 1, wherein the image to-be-transferred comprises the foreground image and the background image, and generating the output image based on the transferred image comprises:

generating the output image by adding pixel values of pixels at a same position in a foreground style transfer image and a background style transfer image, wherein

the foreground style transfer image is obtained by performing style transfer on the foreground image, and the background style transfer image is obtained by performing style transfer on the background image.

11. The method of claim 1, wherein obtaining the foreground image and the background image by segmenting the original image comprises:

obtaining a foreground grayscale matrix and a background grayscale matrix by segmenting the original image through an image segmentation model; and

obtaining the foreground image and the background image by multiplying the original image with the foreground grayscale matrix and multiplying the original image with the background grayscale matrix.

12. The method of claim 1, further comprising:
prior to obtaining the transferred image by performing style transfer on the image to-be-transferred based on the style selection information:

obtaining an image indication instruction;

obtaining first style selection information on condition that the image indication instruction indicates that the image to-be-transferred comprises the foreground image;

obtaining second style selection information on condition that the image indication instruction indicates that the

**EP 4 064 189 A1**

image to-be-transferred comprises the background image; and

obtaining the first style selection information and the second style selection information on condition that the image indication instruction indicates that the image to-be-transferred comprises the foreground image and the background image, wherein

the first style selection information is used for style transfer of the foreground image, and the second style selection information is used for style transfer of the background image.

13. An apparatus for image processing, comprising:

an image segmenting module configured to obtain a foreground image and a background image by segmenting an original image;

an image processing module configured to obtain a transferred image by performing style transfer on an image to-be-transferred based on style selection information, the image to-be-transferred comprising at least one of the foreground image and the background image, the style selection information comprising $n$ transfer styles, $n$ being a positive integer; and

an image generating module configured to generate an output image based on the transferred image.

14. The apparatus of claim 13, wherein the image processing module is configured to obtain the transferred image by performing style transfer on the image to-be-transferred based on the style selection information through a style transfer model.

15. The apparatus of claim 14, wherein the image processing module comprises:

a style selecting unit configured to select $m$ transfer styles from the $n$ transfer styles, $m$ being a positive integer less than or equal to $n$; and

an image processing unit configured to obtain the transferred image by performing style transfer on the image to-be-transferred based on the $m$ transfer styles through the style transfer model.

16. The apparatus of claim 15, wherein the image processing module is configured to:

for an $i$-th transfer style in the m transfer style, determine a product of a weight of the $i$-th transfer style and a style parameter of the $i$-th transfer style as a target style parameter of the $i$-th transfer style, i being a positive integer less than or equal to $m$;

determine a sum of target style parameters of the $m$ transfer styles as a transfer style parameter corresponding to the image to-be-transferred; and

obtain the transferred image by performing style transfer on the image to-be-transferred based on the transfer style parameter through the style transfer model.

17. The apparatus of claim 14, wherein the image to-be-transferred comprises the foreground image and the background image, and the apparatus further comprises a model selecting module configured to:
select, from a set of style transfer models, a model supporting style transfer using first style selection information and second style selection information as the style transfer model, wherein the set of style transfer models comprises at least one model, the first style selection information represents a transfer style corresponding to the foreground image, and the second style selection information represents a transfer style corresponding to the background image.

18. The apparatus of claim 14, wherein the image to-be-transferred comprises the foreground image and the background image, and the apparatus further comprises a model selecting module configured to:

select, from a set of style transfer models, a model supporting style transfer using first style selection information as a first style transfer model, wherein the set of style transfer models comprises at least one model, the first style selection information represents a transfer style corresponding to the foreground image, and the first style transfer model is used for style transfer of the foreground image; and

select, from the set of style transfer models, a model supporting style transfer using second style selection information as a second style transfer model, wherein the second style selection information represents a transfer style corresponding to the background image, and the second style transfer model is used for style transfer of the background image.

19. A computer device, comprising:

a processor; and
a memory storing a computer program which is loaded and executed by the processor to achieve the method for image processing of any of claims 1 to 12.

20. A computer-readable storage medium storing a computer program which is loaded and executed by a processor to achieve the method for image processing of any of claims 1 to 12.

```
┌─────────────────────────────────────────────┐
│  Obtain a foreground image and a background   │   101
│    image by segmenting an original image      │
└─────────────────────────────────────────────┘
                      │
                      ▼
┌─────────────────────────────────────────────┐
│  Obtain a transferred image by performing style│   102
│  transfer on an image to-be-transferred based on│
│         style selection information           │
└─────────────────────────────────────────────┘
                      │
                      ▼
┌─────────────────────────────────────────────┐
│  Generate an output image based on the transferred│  103
│                    image                      │
└─────────────────────────────────────────────┘
```

FIG. 1

```
┌─────────────────────────────────┐
│         TRAINING IMAGE          │
└─────────────────────────────────┘
                 │
                 ▼
┌─────────────────────────────────┐
│     FIRST CONVOLUTIONAL LAYER   │ ⟍ 21
└─────────────────────────────────┘
                 │
                 ▼
┌─────────────────────────────────┐
│    SECOND CONVOLUTIONAL LAYER   │ ⟍ 22
└─────────────────────────────────┘
                 │
                 ▼
┌─────────────────────────────────┐
│     THIRD CONVOLUTIONAL LAYER   │ ⟍ 23
└─────────────────────────────────┘
                 │
                 ▼
┌─────────────────────────────────┐
│        FIRST RESIDUAL LAYER     │ ⟍ 24
└─────────────────────────────────┘
                 │
                 ▼
┌─────────────────────────────────┐
│       SECOND RESIDUAL LAYER     │ ⟍ 25
└─────────────────────────────────┘
                 │
                 ▼
┌─────────────────────────────────┐
│        THIRD RESIDUAL LAYER     │ ⟍ 26
└─────────────────────────────────┘
                 │
                 ▼
┌─────────────────────────────────┐
│      FIRST UPSAMPLING LAYER     │ ⟍ 27
└─────────────────────────────────┘
                 │
                 ▼
┌─────────────────────────────────┐
│     SECOND UPSAMPLING LAYER     │ ⟍ 28
└─────────────────────────────────┘
                 │
                 ▼
┌─────────────────────────────────┐
│          OUTPUT LAYER           │ ⟍ 29
└─────────────────────────────────┘
```

FIG. 2

INPUT

REFLECT PADDING LAYER ⟍ 31

DEPTH-WISE CONVOLUTIONAL LAYER ⟍ 32

POINT-WISE CONVOLUTIONAL LAYER ⟍ 33

INSTANCE NORMALIZATION LAYER ⟍ 34

NON-LINEAR ACTIVATION LAYER ⟍ 35

OUTPUT

FIG. 3

INPUT

CONVOLUTIONAL LAYER ⟍ 41

CONVOLUTIONAL LAYER ⟍ 41

⊕

OUTPUT

FIG. 4

FIG. 5

```
                              ┌─────────────────────┐
                              │   original image    │
                              └─────────────────────┘
                                        │
                                        ▼
                         ┌──────────────────────────────┐
                         │  portrait segmentation model  │
                         └──────────────────────────────┘
                            ╱                        ╲
                           ▼                          ▼
                    ┌───────────┐              ┌──────────────┐
                    │  portrait │              │  background  │
                    │           │              │    image     │
                    └───────────┘              └──────────────┘
                          │                           │
                          ▼                NO          ▼                NO
              ◇─────────────────────────◇     ◇─────────────────────────◇
              │ Whether to be style-transferred │ │ Whether to be style-transferred │
              ◇─────────────────────────◇     ◇─────────────────────────◇
                          │  YES                      │  YES
                          ▼                           ▼
          ┌──────────────────────────────┐  ┌──────────────────────────────────┐
          │ obtain first style selection │  │ obtain second style selection     │
          │         information          │  │           information             │
          └──────────────────────────────┘  └──────────────────────────────────┘
                          │                           │
                          ▼                           ▼
     ┌──────────────────┬─────────────┐  ┌──────────────────────┬──────────────┐
     │ portrait style   │  original   │  │ background style     │  original    │
     │ transfer image   │  portrait   │  │ transfer image       │  background  │
     │                  │             │  │                      │  image       │
     └──────────────────┴─────────────┘  └──────────────────────┴──────────────┘
                              │                    │
                              ▼                    ▼
                           ┌──────────────────────────┐
                           │      Output image        │
                           └──────────────────────────┘
```

FIG. 6

<u>700</u>

```
┌───────────────────────────────────────────────────┐
│                                                   │
│   ┌─────────────────────────────┐                 │
│   │    IMAGE SEGMENTING         │        710       │
│   │        MODULE               │────────          │
│   └─────────────────────────────┘                 │
│                  │                                │
│   ┌─────────────────────────────┐                 │
│   │    IMAGE PROCESSING         │        720       │
│   │        MODULE               │────────          │
│   └─────────────────────────────┘                 │
│                  │                                │
│   ┌─────────────────────────────┐                 │
│   │    IMAGE GENERATING         │        730       │
│   │        MODULE               │────────          │
│   └─────────────────────────────┘                 │
│                                                   │
└───────────────────────────────────────────────────┘
```

FIG. 7

700

DATA
OBTAINING
MODULE — 750

FUNCTION
DETERMINING
MODULE — 760

MODEL
TRAINING
MODULE — 770

INSTRUCTION
OBTAINING
MODULE — 780

IMAGE SEGMENTING
MODULE — 710

INFORMATION
OBTAINING
MODULE — 790

STYLE SELECTING
UNIT — 721

IMAGE
PROCESSING UNIT — 722

IMAGE PROCESSING
MODULE — 720

MODEL
SELECTING
MODULE — 740

IMAGE GENERATING
MODULE — 730

FIG. 8

PROCESSOR — 910

MEMORY — 920

FIG. 9

## INTERNATIONAL SEARCH REPORT

| International application No. |
| --- |
| **PCT/CN2020/130090** |

### A. CLASSIFICATION OF SUBJECT MATTER

G06T 7/33(2017.01)i

According to International Patent Classification (IPC) or to both national classification and IPC

### B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS; CNTXT; TWABS; TWTXT; VEN; USTXT; EPTXT; WOTXT; CNKI: 风格, 迁移, 转移, 迁徙, 背景, 前景, 选择; style, transfer, migrate, background, foreground, select, choose

### C. DOCUMENTS CONSIDERED TO BE RELEVANT

| Category* | Citation of document, with indication, where appropriate, of the relevant passages | Relevant to claim No. |
| --- | --- | --- |
| PX | CN 110956654 A (GUANGDONG OPPO MOBILE TELECOMMUNICATIONS CORP., LTD.) 03 April 2020 (2020-04-03) description, paragraphs 27-169 | 1-20 |
| PX | CN 110830706 A (GUANGDONG OPPO MOBILE TELECOMMUNICATIONS CORP., LTD.) 21 February 2020 (2020-02-21) description, paragraphs 28-103 | 1-3, 5-6, 10-15, 17-20 |
| PX | WO 2020025000 A1 (GUANGDONG OPPO MOBILE TELECOMMUNICATIONS CORP., LTD.) 06 February 2020 (2020-02-06) description, pages 3-13 | 1-3, 5-6, 10-15, 17-20 |
| X | CN 110210347 A (ZHAO, Seng) 06 September 2019 (2019-09-06) description, paragraphs [0029]-[0069] | 1-3, 5-6, 10-15, 17-20 |
| Y | CN 110210347 A (ZHAO, Seng) 06 September 2019 (2019-09-06) description, paragraphs [0029]-[0069] | 4, 7-9, 16, 19-20 |
| Y | CN 109863537 A (GOOGLE INC.) 07 June 2019 (2019-06-07) description, paragraphs 15-67 | 4, 7-9, 16, 19-20 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 February 2021** | **20 February 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2020/130090** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 110222722 A (SOUTH CHINA UNIVERSITY OF TECHNOLOGY) 10 September 2019 (2019-09-10)<br>    description, paragraphs 11-65 | 1-20 |
| Y | CN 109636712 A (BEIJING DAJIA INTERCONNECTION INFORMATION TECHNOLOGY CO., LTD.) 16 April 2019 (2019-04-16)<br>    description, paragraphs 4-73 | 1-20 |
| Y | CN 107613360 A (BEIJING QIHOO TECHNOLOGY CO., LTD.) 19 January 2018 (2018-01-19)<br>    description, paragraphs 4-73 | 1-20 |
| PY | CN 110909790 A (GUANGDONG OPPO MOBILE TELECOMMUNICATIONS CORP., LTD.) 24 March 2020 (2020-03-24)<br>    description, paragraphs 31-164 | 4, 7-9, 16, 19-20 |
| Y | CN 108205813 A (MICROSOFT TECHNOLOGY LICENSING LLC.) 26 June 2018 (2018-06-26)<br>    description, paragraphs 26-92 | 4, 7-9, 16, 19-20 |
| A | US 2019057527 A1 (ADOBE SYSTEMS INC.) 21 February 2019 (2019-02-21)<br>    entire document | 1-20 |

Form PCT/ISA/210 (second sheet) (January 2015)

**INTERNATIONAL SEARCH REPORT**
Information on patent family members

International application No.

**PCT/CN2020/130090**

| Patent document cited in search report | | | Publication date (day/month/year) | Patent family member(s) | | | Publication date (day/month/year) |
|---|---|---|---|---|---|---|---|
| CN | 110956654 | A | 03 April 2020 | None | | | |
| CN | 110830706 | A | 21 February 2020 | None | | | |
| WO | 2020025000 | A1 | 06 February 2020 | None | | | |
| CN | 110210347 | A | 06 September 2019 | None | | | |
| CN | 109863537 | A | 07 June 2019 | EP | 3526770 | A1 | 21 August 2019 |
| | | | | WO | 2018075927 | A1 | 26 April 2018 |
| | | | | US | 10535164 | B2 | 14 January 2020 |
| | | | | EP | 3526770 | B1 | 15 April 2020 |
| | | | | US | 2019236814 | A1 | 01 August 2019 |
| | | | | US | 2020082578 | A1 | 12 March 2020 |
| CN | 110222722 | A | 10 September 2019 | None | | | |
| CN | 109636712 | A | 16 April 2019 | WO | 2020114047 | A1 | 11 June 2020 |
| CN | 107613360 | A | 19 January 2018 | None | | | |
| CN | 110909790 | A | 24 March 2020 | None | | | |
| CN | 108205813 | A | 26 June 2018 | US | 2020082249 | A1 | 12 March 2020 |
| | | | | WO | 2018111786 | A1 | 21 June 2018 |
| | | | | EP | 3555861 | A1 | 23 October 2019 |
| US | 2019057527 | A1 | 21 February 2019 | US | 10699453 | B2 | 30 June 2020 |

Form PCT/ISA/210 (patent family annex) (January 2015)

**REFERENCES CITED IN THE DESCRIPTION**

**Patent documents cited in the description**

- CN 201911212737